# EUROPÄISCHE PATENTSCHRIFT

(11) **EP 0 437 452 B1**
(45) Veröffentlichungstag und Bekanntmachung des Hinweises auf die Patenterteilung: **13.04.1994**
(21) Anmeldenummer: 89910420.2
(22) Anmeldetag: 15.09.1989
(51) Int. Cl.: G21C 19/20

(54) **BRENNELEMENTABZUG FÜR EINEN KUGELHAUFENKERNREAKTOR**
WITHDRAWAL OF FUEL ELEMENTS IN PEBBLE-BED NUCLEAR REACTORS
RETRAIT DES ELEMENTS COMBUSTIBLES D'UN REACTEUR NUCLEAIRE A PILE D'ELEMENTS SPHERIQUES

(30) Priorität: 05.10.1988 DE 8812546 U; 06.09.1989 DE 3929616
(43) Veröffentlichungstag der Anmeldung: 24.07.1991
(73) Patentinhaber: SIEMENS AKTIENGESELLSCHAFT, 80333 München (DE)
(72) Erfinder: ADAMI, Hans-Dieter, D-5064 Rösrath (DE); WERMBTER, Horst-Dieter, W-5064 Rösrath (DE)
(86) Internationale Anmeldenummer: DE8900590
(87) Internationale Veröffentlichungsnummer: WO9004255

(56) Entgegenhaltungen:
- DE-A- 2 406 936
- DE-A- 3 519 759
- DE-A- 3 704 746
- DE-C- 83 508

## Beschreibung

Die vorliegende Erfindung betrifft einen Brennelementabzug für kugelförmige Brennelemente eines gasgekühlten Kugelhaufenkernreaktors mit einem unterhalb eines Reaktorkernbehälters angeordneten, unten offenen Abzugrohr, einem darunter angeordneten Kugelkasten und einer an die Brennelemente angrenzenden rotierbaren Lochscheibe zur Entnahme von Brennelementen.

In einem anschließenden Bruchabscheider können beschädigte Brennelemente aussortiert werden. Die unbeschädigten Brennelemente werden in bekannter Weise kernphysikalisch geprüft, bei ausreichendem Abbrand einem Lagerbehälter zugeführt oder bei noch nicht ausreichendem Abbrand auf pneumatischem Wege von oben dem Kugelhaufenkernreaktor wieder zugeführt.

Brennelementabzüge dieser Art und auch andere, mit bereits strahlenden Brennelementen in Berührung kommende Bauteile müssen sehr betriebssicher und für eine lange Lebensdauer ausgelegt werden, weil sie nur mit hohem Aufwand fernbedient repariert oder ausgewechselt werden können. Ausbaubare Teile sollen wegen des hohen Aufwandes für die Entleerung eines Kugelhaufenkernreaktors, wegen der damit verbundenen zusätzlichen Strahlenbelastung und Einschränkung der Anlagenverfügbarkeit repariert oder ausgewechselt werden können, ohne den Reaktor vorher entleeren zu müssen. Dies gilt besonders für eine Lochscheibe, weil sie die letzte Barriere zum Reaktorkernbehälter bildet.

In der DE-C 24 06 936 wird eine Vorrichtung zum Aussortieren von Brennstoffkugeln mit beschädigter Oberfläche oder verkleinertem Durchmesser beschrieben. Sie ist ausgerüstet mit einer Lochscheibe, die unmittelbar an eine Kugelschüttung unterhalb eines Kugelabzugrohres angrenzt und diese Brennelemente einem Wendelabscheider zuführt. Bei einem Schaden könnte man die Lochscheibe nicht entfernen, ohne den Reaktorkernbehälter zu entleeren.

In der DE-C 35 19 759 wird ein Abzug für kugelförmige Brennelemente aus einem Hochtemperaturkernreaktor beschrieben. Dieser hat eine quer durch das Abzugsrohr sich erstreckende waagerechte Platte, die in der Plattenebene bewegbar ist und eine Öffnung für den Durchgang der Brennelemente aufweist. Diese Platte ist in einer Schiebeführung verschieblich gelagert und kann durch Einführen einer neuen Platte ausgewechselt werden. Dafür sind große Öffnungen im Gehäuse notwendig, die während des Reaktorbetriebes abgedichtet sein müssen. Außerdem muß außerhalb des Gehäuses genügend Platz vorgesehen werden, damit diese große Platte in ihrer waagerechten Ebene verschoben und ausgewechselt werden kann. Die Brennelemente werden durch ein längeres Rohr zu einem Bruchabscheider geführt. In diesem Rohr können Bruchstücke von Brennelementen liegen bleiben oder mit anderen Brennelementen oder Bruchstücken verklemmen. Der Bruchabscheider selbst und die dort hinführende Rohrleitung erfordern einen erheblichen Aufwand an Strahlenschutzabschirmung.

In der DE-A 36 19 422 wird eine Vorrichtung zur Entnahme kugelförmiger Brennelemente aus einem Kugelhaufenkernreaktor beschrieben. Sie hat ein am unteren Ende des Reaktorkernbehälters angeordnetes, zunächst senkrechtes und dann nach oben umgelenktes Abzugsrohr und eine Staueinrichtung, in der die kugelförmigen Brennelemente durch Selbsthemmung, durch Reibung und durch Gravitationskräfte aufgestaut werden. Von der freien Oberfläche werden die Brennelemente einzeln mit einem Rohr abgesaugt und pneumatisch an einen gewünschten Ort in der Nähe des Reaktors befördert. Um das Absaugen der Brennelemente zu erleichtern, können sie durch einen Gasstrom im Bereich der Oberfläche aufgelockert werden. Die Saugeleitung kann durch Kugelbruchstücke verstopft werden. Sie muß mit dem daran anschließenden Bruchabscheider mit erheblichem Aufwand gegen den Austritt radioaktiver Strahlung abgeschirmt werden.

In der DE-A 37 04 746 wird eine Einrichtung zum Abschalten eines Hochtemperaturkernreaktors beschrieben, bei der besondere Absorberkugeln, die einen wesentlich kleineren Durchmesser als die bisher erwähnten kugelförmigen Brennelemente haben, von einem Vorratsbehälter in Hohlräume des Seitenreflektors und von dort über eine Fördereinrichtung zurück zum Vorratsbehälter gelangen. Der Vorratsbehälter hat eine selbstätig wirkende und eine ansteuerbare Vorrichtung zum Freigeben einer Öffnung zwischen dem Vorratsbehälter und der Zufuhrleitung. Das Abzugsrohr endet in einem nach oben umgelenkten Gehäuse, das die Bildung eines Schüttkegels durch die Absorberkugeln erlaubt. Zum Rückführen der Absorberkugeln wird am Schüttkegel ein Gasstrom benutzt, der die Absorberkugeln zu einer Förderleitung bringt. Eine an die Brennelemente angrenzende, rotierbare Lochscheibe ist dort nicht vorgesehen.

In der DE-C 83 508 wird eine Vorrichtung zum Sortieren von Brennelementen beschrieben, bei der die zu sortierenden Brennelemente aus einem Kugelkasten mit geneigtem Boden einzeln entnommen und mit einem senkrechten Hebestift über eine Kante gehoben werden. Für einen Hochtemperaturkernreaktor ist eine solche mechanische Vorrichtung nicht geeignet, weil sie ohne vorherige Entleerung des Kugelkastens nicht aus- und eingebaut werden kann.

In der Zeitschrift "Atomwirtschaft" 1988 wird auf Seite 436 über Betriebserfahrungen mit dem THTR-300, dem Thorium-Hochtemperatur-Reaktor in Hamm, berichtet. Dabei wird ein Kugelabzugsrohr mit Kugelkasten und Wendelabscheider für beschädigte Brennelemente beschrieben, bei dem eine Lochscheibe des Wendelabscheiders die Brennelemente vom untersten Punkt des Kugelkastens entnimmt. Zum Auswechseln dieser Lochscheibe muß offensichtlich der Reaktor entleert werden. Für den Fall, daß der Wendelabscheider ohne seine Lochplatte ausgebaut werden sollte, müßte zwischen Wendelabscheider und Lochplatte eine komplizierte, fernbedienbare Kupplung vorhanden sein. Aus diesem Bericht ist auch erkennbar, daß der Staudruck eines Gasstroms am Kugelaustritt das Herausrollen der Brennelemente behindern kann. Die Umkehrung dieses Effektes und Ausnutzung gemäß der vorliegenden Erfindung ist aus diesem Bericht nicht zu entnehmen.

Aufgabe der vorliegenden Erfindung ist die Angabe eines Brennelementabzuges für kugelförmige Brennelemente eines gasgekühlten Kugelhaufenkernreaktors mit einer an die Brennelemente angrenzenden, rotierbaren Lochscheibe zur Entnahme von Brennelementen, die ohne Entleerung des darüber angeordneten Reaktorkernbehälters aus- und eingebaut werden kann.

Diese Aufgabe wird erfindungsgemäß dadurch gelöst, daß zwischen dem Mündungsteil des Abzugsrohrs und der Lochscheibe und oberhalb des Bodens des Kugelkastens eine Staukante vorhanden ist, und daß vor dieser Staukante im Boden des Kugelkastens Gasdüsen münden.

Bei dieser Anordnung kann die an die Brennelemente angrenzende Lochplatte fernbedient ausgebaut werden, ohne daß die im Mündungsteil des Abzugsrohrs und in dem darüber angeordneten Reaktorbehälter vorhandenen Brennelemente auslaufen können. Zur Entnahme werden die Brennelemente durch einen aus den Gasdüsen austretenden Gasstrom aufgelockert, so daß sie nahezu reibungsfrei über die Kante fließen und in eine Öffnung der Lochscheibe eintreten können. Ohne diesen Gasstrom bildet sich unter dem Mündungsteil des Abzugsrohrs vor der Staukante ein Schüttkegel von Brennelementen, die nicht auslaufen können.

In weiterer Ausgestaltung ist ein Gebläse vorgesehen, das über einen Filter unmittelbar aus einem Raum hinter der Lochplatte ansaugt und das in die Gasdüsen fördert. Mit diesem Gebläse wird ein in sich geschlossener, von dem ohnehin vorhandenen Kühlgaskreislauf unabhängiger Kreislauf geschaffen, der den Austritt der Brennelemente aus dem Reaktorbehälter nicht behindern kann. Mit dem Filter kann auch verhindert werden, daß der in dem Bruchabscheider vorhandene Kugelabrieb ins Kugelfördersystem und damit in den Reaktor zurückgebracht wird.

In weiterer Ausgestaltung ist die Lochscheibe mit dem rotierbaren Teil eines Bruchabscheiders fest verbunden. Diese sehr zweckmäßige und einfache Konstruktion wird erst durch den Grundgedanken der vorliegenden Erfindung ermöglicht. Bisher mußte die Lochscheibe mit dem Bruchabscheider fernbedient trennbar verbunden sein, um die Brennelemente am Auslaufen zu hindern, wenn der Bruchabscheider ausgebaut werden sollte.

Die Figuren 1 und 2 zeigen als Ausführungsbeispiel einen erfindungsgemäßen Brennelementabzug unterhalb des Reaktorkernbehälters eines gasgekühlten Kugelhaufenkernreaktors. Figur 1 zeigt einen senkrechten Schnitt sowie einen nur schematisch angedeuteten Gebläsekreislauf.
Figur 2 zeigt einen senkrechten Schnitt durch Figur 1 entlang der Linie II-II.

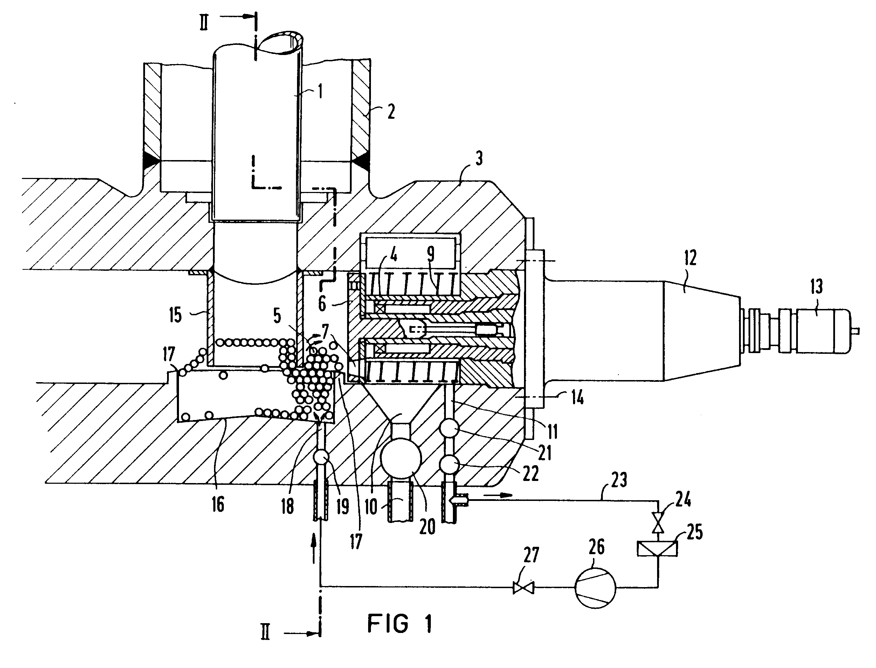

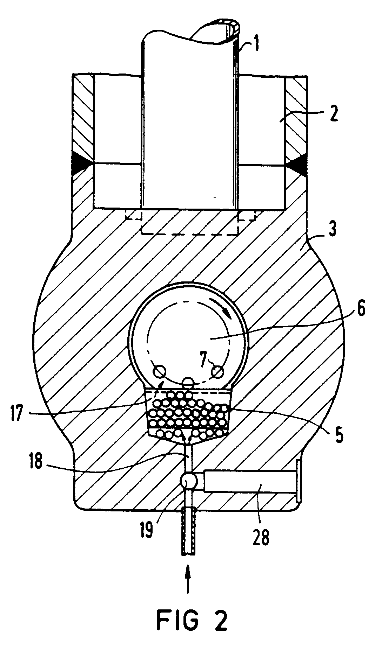

In den Figuren 1 und 2 ist unterhalb eines nicht dargestellten Reaktorkernbehälters ein Brennelement-Abzugsrohr 1 innerhalb eines Schutzrohres 2 angeordnet. In dem Gehäuse 3 sind zwei einander gegenüberliegende Bruchabscheider 4 angeordnet, von denen nur einer gezeichnet ist. Ein solcher, an sich bekannter Wendelabscheider ist beispielsweise in der oben erwähnten DE-PS 24 06 936 und der Zeitschrift "Atomwirtschaft" beschrieben. Die an die kugelförmigen Brennelemente 5 angrenzende Lochscheibe 6 hat eine oder mehrere Öffnungen 7, die jeweils zur Aufnahme eines einzelnen Brennelementes 5 ausreichen. Sie rotiert während der Entnahme mit waagerechter Achse und befördert die Brennelemente 5 einzeln in eine mitrotierende Wendel 9, in der Kugelbruchstücke oder zu kleine Brennelemente ausgeschieden werden, die in einen Bruchabzug 10 fallen. Nur die vollständigen Brennelemente 5 werden bis zum Gutkugelabzug 11, d. h. Abzug für gute Brennelemente, mitgenommen. Am Gehäuse 3 ist auf beiden Seiten je ein Antriebsgehäuse 12 mit einem Motor 13 angeflanscht, das nach Lösen der Schrauben 14 ebenso wie der Bruchabscheider 4 und die Lochscheibe 6 fernbedient ausgebaut werden kann. Das Abzugsrohr 1 wird vom Gehäuse 3 getragen und setzt sich nach unten fort mit einem Mündungsteil 15 bis in den rechteckigen Kugelkasten 16. Im Boden des Kugelkastens 16 mündet mindestens eine Gasdüse 18. Der Boden ist zu der oder den Gasdüsen 18 hin geneigt, damit keine Brennelemente 5 stagnieren. Unten am Mündungsteil 15 bilden die Brennelemente 5 - wie links dargestellt - einen Schuttkegel mit einem definierten Schüttwinkel, so daß die Brennelemente 5 nicht von selbst über eine vor der Lochscheibe 6 angeordnete waagerechte Staukante 17 rollen können. Die Staukante 17 wird hier von der oberen, inneren Kante einer Seitenwand des Kugelkastens 16 gebildet. Damit die Brennelemente 5 zur Entnahme über die Staukante 17 fließen und in eine Öffnung 7 der Lochscheibe 6 eintreten können, werden sie - wie rechts dargestellt - von unten mit einem Gasstrom aus Gasdüsen 18 aufgelockert und angehoben. Diese Gasdüsen 18, der Bruchabzug 10 und der Gutkugelabzug 11 lassen sich durch Kugelhähne 19, 20, 21 und 22 fernbedient verschließen. Seitlich am Gutkugelabzug 11 ist eine Rohrleitung 23 angeschlossen, die über ein Absperrventil 24, einen Filter 25, ein Gebläse 26 und ein Regelventil 27 die Gasdüsen 18 versorgt. Seitlich des Kugelhahns 19 ist in Figur 2 eine zylindrische Öffnung 28 angedeutet zur Aufnahme einer fernbedienten Betätigung für den Kugelhahn 19.

Bei laufendem Gebläse 26 und geöffneten Armaturen 19, 21, 22, 24, 27 werden die Brennelemente 5 angehoben und aufgelockert; letztere können mit der rotierenden Lochscheibe 6 entnommen werden. Nach Abschalten des Gebläses 26 oder Schließen einer der vorhandenen Armaturen kann die rotierende Lochscheibe 6 nur noch einige Brennelemente 5 entnehmen. Danach bildet sich, wie links dargestellt, vor der Staukante 17 ein Schüttkegel, der die Brennelemente 5 am Ausfließen hindert, so daß die Lochscheibe 6 nach dem Stillsetzen unbesorgt ausgebaut werden kann.

## Patentansprüche

1. Brennelementabzug für kugelförmige Brennelemente (5) eines gasgekühlten Kugelhaufenkernreaktors mit einem unterhalb eines Reaktorkernbehälters angeordneten, unten offenen Abzugsrohr (1), einem darunter angeordneten Kugelkasten (16) und einer an die Brennelemente (5) angrenzenden rotierbaren Lochscheibe (6) zur Entnahme von Brennelementen (5), **dadurch gekennzeichnet**, daß zwischen einem Mündungsteil (15) des Abzugsrohrs (1) und der Lochscheibe (6) und oberhalb des Bodens des Kugelkastens (16) eine Staukante (17) vorhanden ist, und daß vor dieser Staukante (17) im Boden des Kugelkastens (16) Gasdüsen (18) münden.

2. Brennelementabzug nach Anspruch 1**, dadurch gekennzeichnet**, daß ein Gebläse (26) vorhanden ist, das über einen Filter (25) aus einem Raum hinter der Lochscheibe (6) ansaugt und das in die Gasdüsen (18) fördert.

3. Brennelementabzug nach Anspruch 1 oder 2, **dadurch gekennzeichnet**, daß die Lochscheibe (6) mit dem rotierbaren Teil eines Bruchabscheiders (4) fest verbunden ist.

4. Brennelementabzug nach einem der Ansprüche 1 bis 3, **dadurch gekennzeichnet,** daß die Staukante (17) durch die obere Kante einer Seitenwand des Kugelkastens (16) gebildet ist.

5. Brennelementabzug nach einem der Ansprüche 1 bis 4, **dadurch gekennzeichnet,** daß der Kugelkasten (16) einen geneigten Boden aufweist.

## Claims

1. Fuel element outlet for spherical fuel elements (5) of a gas-cooled ball-bed nuclear reactor with an outlet pipe (1) open at the bottom and arranged below a reactor core container, with a ball housing (16) arranged thereunder and a rotatable perforated disc (6), adjacent to the fuel elements (5), for removing the fuel elements (5), characterised in that between a mouth part (15) of the outlet pipe (1) and the perforated disc (6) and above the base of the ball housing (16) there is a collecting edge (17) and in that gas nozzles (18) open in front of this collecting edge (17) in the base of the ball housing (16).

2. Fuel element outlet according to claim 1, characterised in that a fan (26) is present which sucks in by way of a filter (25) from a chamber behind the perforated disc (6) and which conveys into the gas nozzles (18).

3. Fuel element outlet according to claim 1 or 2, characterised in that the perforated disc (6) is firmly connected to the rotatable part of a breakage separator (4).

4. Fuel element outlet according to one of claims 1 to 3, characterised in that the collecting edge (17) is formed by the upper edge of a side wall of the ball housing (16).

5. Fuel element outlet according to one of claims 1 to 4, characterised in that the ball housing (16) has an inclined base.

## Revendications

1. Dispositif d'évacuation des éléments combustibles (5), de forme sphérique, d'un réacteur à lit de boulets et à refroidissement par du gaz, comprenant un tube d'évacuation, disposé sous une cuve de réacteur nucléaire et ouvert vers le bas, un caisson (16) à boulets sousjacent, un disque (6) perforé tournant adjacent aux éléments combustibles (5) et destiné à leur prélèvement, caractérisé en ce qu'il est prévu entre une partie d'embouchure (15) du tube (1) d'évacuation et le disque (6) perforé et au-dessus du fond du caisson (16) à boulets, un bord (17) d'accumulation et en ce que des buses (18) à gaz débouchent en amont de ce bord (17) d'accumulation au fond du caisson (16) à boulets.

2. Dispositif d'évacuation d'éléments combustibles suivant la revendication 1, caractérisé en ce qu'il est prévu une soufflante (26), qui aspire par l'intermédiaire d'un filtre (25) dans une chambre en aval du disque (6) perforé et qui refoule dans les buses (18) à gaz.

3. Dispositif suivant la revendication 1 ou 2, caractérisé en ce que le disque (6) perforé est relié rigidement à une partie tournante d'un séparateur (4) de fragments.

4. Dispositif suivant l'une des revendications 1 à 3 caractérisé en ce que le bord (17) d'accumulation est formé par le bord supérieur d'une paroi latérale du caisson (16) à boulets.

5. Dispositif suivant l'une des revendications 1 à 4, caractérisé en ce que le caisson (16) à boulets a un fond incliné.
